(19) Europäisches Patentamt
European Patent Office
Office européen des brevets

(11) Veröffentlichungsnummer : **0 061 686**
**B1**

(12) # EUROPÄISCHE PATENTSCHRIFT

(45) Veröffentlichungstag der Patentschrift : **19.08.87**

(51) Int. Cl.⁴ : **C 08 B 11/193**, C 08 B 11/04, C 08 B 11/10

(21) Anmeldenummer : **82102354.6**

(22) Anmeldetag : **22.03.82**

(54) **Celluloseether und Cellulosemischether mit mindestens einem phosphorhaltigen Substituenten und ein Verfahren zu ihrer Herstellung.**

(30) Priorität : **31.03.81 DE 3112945**

(43) Veröffentlichungstag der Anmeldung : **06.10.82 Patentblatt 82/40**

(45) Bekanntmachung des Hinweises auf die Patenterteilung : **19.08.87 Patentblatt 87/34**

(84) Benannte Vertragsstaaten : **DE FR GB**

(56) Entgegenhaltungen :
**DE-A- 2 600 930**
**GB-A- 973 952**
**US-A- 2 743 232**
**TEXTILE RESEARCH JOURNAL, Band 29, Nr. 3, März 1959, Seiten 270 bis 275. G.L. DRAKE et al.: "Phosphonomethylation of cotton"**

(73) Patentinhaber : **HOECHST AKTIENGESELLSCHAFT**
**Postfach 80 03 20**
**D-6230 Frankfurt am Main 80 (DE)**

(72) Erfinder : **Brandt, Lothar, Dr.**
**Alfred-Schumann-Strasse 23**
**D-6200 Wiesbaden-Schierstein (DE)**
Erfinder : **Holst, Arno, Dr.**
**Drususstrasse 3**
**D-6200 Wiesbaden (DE)**
Erfinder : **Kleiner, Hans-Jerg, Dr.**
**Altkönigstrasse 11 a**
**D-6242 Kronberg 2 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft Celluloseether mit mindestens einem phosphorhaltigen Substituenten und deren Mischether und ein Verfahren zu ihrer Herstellung in einem wäßrigen, gegebenenfalls ein organisches Lösemittel enthaltenden alkalischen Medium.

Einen anionaktiven Substituenten tragende Celluloseether werden für viele Verfahren und Anwendungsgebiete als Hilfsmittel (wie als Schutzkolloid, Flockungsmittel, Binde- und Klebemittel, Dispergierhilfsmittel, Filmbildner) und/oder wasserlösliche Verdicker eingesetzt, dazu zählen beispielsweise die Seifen- und Waschmittelherstellung, die Papierherstellung, die Baustoffherstellung und -anwendung, die Faserverarbeitung, die Lack- und Farbenherstellung, die Herstellung von Lebens- und Genußmitteln und die Pharmazie und Kosmetik. Das bekannteste Handelsprodukt dieser Art von Celluloseether ist die Carboxymethylcellulose (CMC), die üblicherweise in der Form des Na-Salzes (NaCMC) vertrieben wird ; von gewisser Bedeutung sind auch andere Carboxyalkylether oder Sulfoalkylether der Cellulose, aber auch Mischether, die neben dem anionaktiven Substituenten (in der Regel Carboxymethyl) noch andere Ethergruppen enthalten, dazu zählen beispielsweise die Methyl-carboxymethylcellulsoe (MCMC), die Hydroxyethyl-carboxymethylcellulose (HECMC) oder auch die Ethylhydroxyethyl-carboxymethylcellulose (EHECMC). Wenn man mehrbasische anionaktive Ethersubstituenten an das Cellulosemolekül bringen will, so bieten sich dazu insbesondere organische Phosphonsäuren oder ihre Derivate an. Die Umsetzung von Cellulose mit reaktiven, organischen Phosphonsäuren oder ihren Derivaten (z. B. Halogen-alkanphosphonsäuren) ergibt Celluloseether, die im Ethersubstituenten eine Phosphonsäuregruppe oder eine ihrer Salzformen tragen. Diese Celluloseether mit Phosphonsäuregruppen sind oftmals wasserunlöslich, da die Reaktion mit beispielsweise Halogen-alkanphosphonsäuren zu mehr als sehr niedrigen Substitutionsgraden nicht ohne weiteres möglich ist ; es sind aber auch bereits wasserlösliche Produkte bekannt geworden :

In der US-PS 2 979 374 oder dem Aufsatz « Phosphonomethylation of Cotton » (Phosphonomethylierung von Baumwolle) von G.L. Drake, W.A. Reeves und J.D. Guthrie in Textile Research Journal, März 1959, Seiten 270 bis 275, werden chemisch modifizierte, fasrige, textile Materialien auf Cellulosebasis und ein Verfahren zu deren Herstellung beschrieben, bei denen einige der Hydroxylgruppen des Polysaccharids durch $—O—CH_2—PO_3X_2$ Gruppen ersetzt sind, wobei der Modifizierungsgrad bei 0,01 bis 4 Gew.-% liegen soll ; X bedeutet in der allgemeinen Formel entweder H, ein Alkalimetall oder $NH_4$. in dem Verfahren zur Herstellung dieser Produkte wird das fasrige Ausgangsmaterial mit einer wäßrigen Lösung eines Alkalimetallsalzes der Chlormethanphosphonsäure oder einem anderen Salz dieser Säure und einem Überschuß an Alkalimetallhydroxid umgesetzt ; die erhaltenen Produkte können auch noch in die freie Säureform oder in die entsprechenden Ammoniumsalze umgewandelt werden. Auch wasserlösliche Phosphonomethylether der Cellulose können hergestellt werden, wenn der Modifizierungsgrad so gewählt wird, daß 2 und mehr Gew.-% an Phosphor eingeführt werden. Als Ausgangsmaterialien werden genannt : Baumwollfasern, Cellulosehydratfasern, aminierte Baumwollfasern, carboxymethylierte Baumwollfasern, Papier und sulfoethylierte Baumwollfasern. Die Phosphonomethyl-Gruppen können entweder durch Einsatz eines Metallsalzes der Chlor-methanphosphonsäure selbst oder des Säurechlorids eingebracht werden, auch der Einsatz der entsprechenden Mono- oder Diester soll möglich sein.

Die vernetzten Phosphonoalkylcellulosen nach der DE-OS 26 00 930 (= US-PS 4 020 271) bestehen aus solchen Grundkörpern, die ohne Vernetzung an sich wasserlöslich wären, aber durch die Vernetzung mit Formaldehyd, Epichlorhydrin, Dichloressigsäure, Diepoxiden oder anderen bekannten bifunktionellen Komponenten im wesentlichen wasserunlöslich gemacht werden. Zur Durchführung der Veretherungsstufe wird auf die vorher erwähnte US-PS 2 979 374 verwiesen.

Die Verfahren zur Herstellung von Ionenaustauschern gemäß der DE-AS 20 05 407 (= US-PS 3 634 394) oder der DE-AS 20 05 408 (= US-PS 3 652 540) können auch zu solchen Produkten führen, die einen Phosphonomethylrest tragen ; dazu werden beispielsweise Perlen aus regenerierter Cellulose in Toluol in Anwesenheit von Benzethoniumchlorid $[CH_3—C(CH_3)_2—CH_2—C(CH_3)_2—C_6H_4—(O—CH_2—CH_2)_2—N^{\oplus}(CH_3)_2—CH_2—C_6H_5, Cl^-]$ mit einer NaOH, $NaBH_4$, Wasser und Chlor-methanphosphonsäure enthaltenden Lösung während 16 h bei 90 °C umgesetzt, das erhaltene Produkt ist wasserunlöslich. Die Phosphonopropylcellulosen gemäß dem SU-Erfinderschein 596 593 weisen am Cellulosegrundgerüst Ethersubstituenten der allgemeinen Formel

$$-(CH_2)_3-PO{\genfrac{}{}{0pt}{}{\diagup R}{\diagdown OR'}}$$

auf, in der R ein Wasserstoffatom oder eine niedere Alkoxygruppe und R' ein Alkalimetall oder eine niedere Alkylgruppe bedeuten. Diese Produkte sind demnach weder Phosphonosäuren oder deren Mono- und Disalze noch Alkylphosphinsäuren oder deren Salze, wie sie erfindungsgemäß beansprucht werden. Das Verfahren zur Herstellung dieser Verbindungen wird so durchgeführt, daß man Alkylcellulose mit Alkalisalzen der Hypophosphorigen Säure oder mit Dialkylphosphiten (Dialkylestern der Phosphorigen

Säure) in der Gegenwart organischer Peroxide bei 80 bis 100 °C umsetzt.

Es sind auch bereits Verfahren zur Herstellung von als Substituenten ausschließlich Phosphonomethylgruppen enthaltenden Celluloseethern oder -mischethern mit solchen Substituenten vorgeschlagen worden, die einerseits gegenüber dem vorher dargestellten Stand der Technik in der Verfahrensführung verbessert sind und andererseits teilweise zu neuen Reaktionsprodukten führen :

In der nicht-vorveröffentlichten DE-OS 30 39 978 wird ein Verfahren zur Herstellung von wasserlöslichen Phosphonomethylethern der Cellulose aus Cellulose und Halogenmethanphosphonsäure oder einem ihrer Salze oder Säurederivate beschrieben. Das Reaktionsmedium enthält dabei neben 2,1 bis 15 Mol Hydroxid-Ionen und 0,4 bis 3,0 Mol Halogen-methanphosphonat-Ionen als Veretherungsmittel noch 3 bis 50 Gew.-Teile, pro Gew.-Teil Cellulose, eines Gemisches aus Wasser und einem organischen Lösemittel wie Isopropanol ; der Substitutionsgrad ($DS_{PM}$) des Reaktionsprodukts soll mindestens 0,13 betragen. In der ebenfalls nicht-vorveröffentlichten DE-OS 30 39 963 werden wasserlösliche Mischether der Cellulose beschrieben, die a) mindestens einen Substituenten aus der Gruppe Alkyl, Hydroxyalkyl, Carboxyalkyl, Sulfoalkyl und Dialkylaminoalkyl und b) einen Phosphonomethyl-Substituenten aufweisen ; der Substitutionsgrad (DS bzw. MS) beträgt dabei 0,05 bis 2,95 für den DS bzw. 0,5 bis 6,0 für den $MS_{HAlk}$ der Substituenten unter a) und 0,005 bis 0,8 für den $DS_{PM}$. Ein Verfahren zur Herstellung dieser Mischether verläuft ähnlich wie das vorher dargestellte zur Herstellung der reinen Ether.

Eine Aufgabe der vorliegenden Erfindung ist es, neue, insbesondere wasserlösliche Celluloseether mit einem phosphorhaltigen Substituenten vorzuschlagen. Eine weitere Aufgabe der Erfindung ist es, ein Verfahren zur Herstellung dieser Produkte aufzufinden, das insbesondere auch bei verhältnismäßig niedriger Temperatur und ohne nennenswerten Kettenabbau durchgeführt werden kann.

Eine Lösung der Aufgabe sind dann mindestens einen phosphorhaltigen Substituenten aufweisende Celluloseether oder deren Mischether auf der Basis mindestens eines phosphorfreien Substituenten aus der Gruppe Alkyl, Hydroxyalkyl, Carboxyalkyl, Sulfonoalkyl, Aminoalkyl und Dialkylaminoalkyl, die als den oder die phosphorhaltigen Substituenten durch die allgemeine Formel

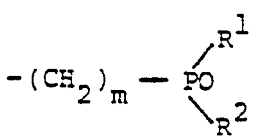

beschriebene Gruppen tragen, in der

$R^1$ und $R^2$ = OX, oder $R^1$ = OX und $R^2$ = OY, oder $R^1$ = OX und $R^2 = (CH_2)_n—CH_3$, oder $R^1$ und $R^2 = (CH_2)_n—CH_3$, oder $R^1 = (CH_2)_n—CH_3$ und $R^2 = (CH_2)_p—CH_3$ sind, wobei

X, Y ein Wasserstoffatom oder ein einwertiges Kation,

m eine ganze Zahl von 1 bis 4, und

n, p gleich oder verschieden sind und 0 oder 1

bedeuten, ausgenommen solche Gruppen, in denen m = 1 oder 2 und $R^1$ und $R^2$ = OX oder $R^1$ = OX und $R^2$ = OY sind. Der « disclaimer » bezieht sich u. a. auf die in den älteren, nicht-vorveröffentlichten DE-OS 30 39 978 und DE-OS 30 39 963 beschriebenen Verbindungen.

Zu den unter die allgemeine Formel fallenden phosphorhaltigen Substituenten gehören die folgenden Gruppen :

Phosphonopropyl oder Phosphonobutyl ($R^1$, $R^2$ = OX bzw. OY, m = 3 oder 4) ;

Methyl-phosphinomethyl, Methyl-phosphinoethyl, Methylphosphinopropyl, Methyl-phosphinobutyl, Ethyl-phosphinomethyl, Ethyl-phosphinoethyl, Ethyl-phosphinopropyl, Ethyl-phosphinobutyl ($R^1$ = OX, $R^2 = (CH_2)_n—CH_3$, m = 1 bis 4, n = 0 oder 1) ;

2-Methyl-2-oxo-2-phosphapropyl, 2-Methyl-2-oxo-2-phosphabutyl, 2-Methyl-2-oxo-2-phosphapentyl, 2-Methyl-2-oxo-2-phosphahexyl, 3-Methyl-3-oxo-3-phosphabutyl, 3-Methyl-3-oxo-3-phosphapentyl, 3-Methyl-3-oxo-3-phosphahexyl, 3-Methyl-3-oxo-3-phosphaheptyl, 3-Ethyl-3-oxo-3-phosphabutyl, 3-Ethyl-3-oxo-3-phosphapentyl, 3-Ethyl-3-oxo-3-phosphahexyl, 3-Ethyl-3-oxo-3-phosphaheptyl ($R^1$, $R^2 = (CH_2)_n—CH_3$ bzw. $(CH_2)_p—CH_3$, m = 1 bis 4, n, p = 0 bzw. 1) ;

sofern diese Gruppen sich von der Alkanphosphonsäure oder der Alkyl-alkylphosphinsäure ableiten, so ist der Rest X und/oder Y ein Wasserstoffatom oder ein als einwertiges Kation vorliegender Rest. Von den aufgeführten Verbindungen sind solche bevorzugt, in denen X und/oder Y = Wasserstoff, $Na^+$ oder $NH_4^+$, m = 1 oder 3, und n oder n und p = 0 sind, dazu zählen dann u. a. die Gruppen Mononatrium (oder Monoammonium)-phosphonopropyl, Dinatriumphosphonopropyl, Natrium-methyl-phosphinomethyl, Ammonium-methylphosphinopropyl, 2-Methyl-2-oxo-2-phosphapropyl oder 2-Methyl-2-oxo-2-phosphapentyl.

Wenn die erfindungsgemäßen Verbindungen nicht als reine Celluloseether, d. h. ausschließlich einen oder mehrere phosphorhaltige Substituenten aufweisende Produkte, sondern als Cellulosemischether vorliegen, d. h. neben dem oder den phosphorhaltigen Substituenten — bevorzugt sind in beiden Fällen Produkte mit nur einer Art von phosphorhaltigem Substituenten — mindestens einen phosphorfreien Substituenten aufweisen, so sollen die weiter oben aufgeführten Begriffe folgende bevorzugte Bedeutung haben : « Alkyl » umfaßt Methyl und Ethyl, « Hydroxyalkyl » umfaßt Hydroxyethyl bis Hydroxybutyl,

« Carboxyalkyl » umfaßt Carboxymethyl und Carboxyethyl, « Sulfonoalkyl » umfaßt Sulfonomethyl bis Sulfonopropyl, « Aminoalkyl » umfaßt Aminomethyl bis Aminopropyl und « Dialkylaminoalkyl » umfaßt N,N-disubstituierte Aminomethyl- bis Aminobutylgruppen mit N-Alkylgruppen von $C_1$ bis $C_5$ (gleich oder verschieden), wobei aber die Bezeichnung « Dialkylamino » auch N-terminale heterocyclische Reste oder quartäre Ammoniumgruppierungen einschließen soll.

Zu den erfindungsgemäßen phosphorhaltigen Cellulosemischethern gehören bevorzugt solche, die neben einem phosphorhaltigen Substituenten als phosphorfreien Substituenten eine Methyl-, Ethyl-, Hydroxyethyl, Hydroxypropyl- und/oder Carboxymethyl-Gruppen tragen. Als erfindungsgemäße, insbesondere wasserlösliche Cellulosemischether können dann beispielsweise die folgenden genannt werden :

Hydroxyethyl-phosphonopropylcellulose (HEPPC), Methyl-(methyl-phosphinomethyl)cellulose (M(MPM)C), Carboxymethyl-(methyl-phosphinopropyl)cellulose (CM(MPP)C), Sulfoethyl-phosphonopropylcellulose (SEPPC), 2-Diethylaminoethyl-(methyl-phosphinoethyl)cellulose (DEAE(MPE)C), 2-Aminoethyl-(2-methyl-2-oxo-2-phosphapropyl)cellulose oder (3-Trialkylammonio-2-hydroxypropyl)-phosphonopropyl-cellulose.

Unter den in den bisherigen und den noch folgenden Ausführungen gebrauchten Parametern zur Charakterisierung der Celluloseether ist folgendes zu verstehen : Der « DS » ist der Substitutionsgrad, d. h. die mittlere Anzahl von substitutierten OH-Gruppen pro Anhydro-D-glucose-Einheit ; er liegt bei Cellulose im Bereich von 0,0 bis 3,0. Der « MS » ist der molare Substitutionsgrad, d. h. die mittlere Anzahl von Molen des substituierenden Reagens, die pro Mol Anhydro-D-glucose-Einheit etherartig gebunden werden ; er kann bei Cellulose auch größer als 3,0 sein und wird normalerweise anstelle des DS zur Charakterisierung solcher Substituenten am Celluloseether verwendet, die durch Mehrfachsubstitution an einer OH-Gruppe entstehen können (Hydroxyalkylgruppen). « $MS_{HE}$ » bedeutet dann den MS bezogen auf den Hydroxyethyl-Substituenten, « $DS_p$ » den DS bezogen auf den oder die phosphorhaltigen Substituenten, « $DS_{pp}$ » den DS bezogen auf den Phosphonopropyl-Substituenten oder « $DS_{CM}$ » den DS bezogen auf den Carboxymethyl-Substituenten.

In den Celluloseethern, die keinen phosphorfreien Substituenten aufweisen, liegt der $DS_p$ bevorzugt bei 0,05 bis 0,8 und in den Cellulosemischethern, die auch mindestens einen phosphorfreien Substituenten aufweisen, liegt der $DS_p$ bevorzugt bei 0,02 bis 0,3. Die Produkte mit ausschließlich phosphorhaltigen Substituenten sind unterhalb eines $DS_p$ von etwa 0,05 unlöslich in wäßrigen Medien, von diesem Wert ab aber löslich in starken Basen wie beispielsweise einer 2n wäßrigen NaOH-Lösung ; die Phosphonoalkyl- bzw. Alkyl-phosphinoalkylcellulose können — abhängig auch von der Struktur des phosphorhaltigen Substituenten, z. B. Salz- oder Säureform — ab einem $DS_p$ von etwa 0,13 bis 0,20 bereits mindestens teilweise bei neutralem pH-Wert wasserlöslich sein. Als « wasserlöslich » soll in diesen Fällen « nicht weniger löslich als 60 Gew.-% » gelten.

Die entsprechenden Mischether sind vorzugsweise im Neutralen wasserlöslich, sie haben dann beispielsweise neben mindestens einem phosphorhaltigen Substituenten einen Hydroxyethyl-Substituenten mit einem $MS_{HE}$ von 1,3 bis 3,0 und/oder einen Carboxymethyl-Substituenten mit einem $DS_{CM}$ von 0,3 bis 1,5. Der Begriff « wasserlöslich » soll bedeuten, daß die erfindungsgemäßen Produkte nicht mehr als 10 Gew.-%, insbesondere nicht mehr als 5 Gew.-% wasserunlösliche Anteile aufweisen ; diese wasserunlöslichen Anteile können beispielsweise aus unveretherter Cellulose und/oder zu niedrig oder zu hoch substituierten Celluloseetheranteilen bestehen.

Eine weitere Lösung der eingangs gestellten Aufgabe ist ein Verfahren zur Herstellung der erfindungsgemäßen Verbindungen, das dadurch gekennzeichnet ist, daß man zur Herstellung des mindestens einen phosphorhaltigen Substituenten aufweisenden Celluloseethers pro mol Cellulose

0,8 bis 15,0 mol Hydroxid-Ionen und

0,05 bis 3,0 mol Halogenalkanphosphonat-Ionen, Halogenalkyl-alkylphosphinat-Ionen oder Halogenalkyl-dialkylphosphanoxid

und zur Herstellung des entsprechenden Mischethers pro mol Cellulose zusätzlich

0,1 bis 25,0 mol des oder der Veretherungsmittel zur Erzeugung des oder der phosphorfreien Substituenten

mit Cellulose zur Reaktion bringt, wobei im Reaktionsmedium mindestens 5 mol Wasser pro mol Cellulose, gegebenenfalls unter Zumischung eines inerten, bevorzugt mit Wasser mischbaren organischen Lösemittels, anwesend sind.

In einer bevorzugten Ausführungsform des erfindungsgemäßen Verfahrens bringt man zur Herstellung des mindestens einen phosphorhaltigen Substituenten aufweisenden Celluloseethers pro mol Cellulose

1,0 bis 8,0 mol Hydroxid-Ionen und

0,1 bis 1,0 mol Halogenalkanphosphonat-Ionen, Halogenalkyl-alkylphosphinat-Ionen oder Halogenalkyl-dialkylphosphanoxid

und zur Herstellung des entsprechenden Mischethers pro Mol Cellulose zusätzlich

0,3 bis 20,0 mol des oder der Veretherungsmittel zur Erzeugung des oder der phosphorfreien Substituenten

mit Cellulose zur Reaktion, wobei im Reaktionsmedium 5 bis 20 mol Wasser pro Mol Cellulose anwesend sind. Die Herstellung von Mischethern bzw. allgemein die Herstellung von solchen Celluloseethern, die keinen phosphorhaltigen Substituenten tragen, ist seit vielen Jahren, z. T. seit vielen Jahrzehnten bekannt, so daß im Rahmen dieser Erfindung nicht darauf eingegangen werden muß ; es wird aber beispielhaft auf Ullmanns Encyklopädie der technischen Chemie, 4. Auflage — 1975, Band 9, Verlag Chemie — Weinheim, Stichwort « Celluloseäther », Seiten 192 bis 212 verwiesen.

Das Verfahren kann diskontinuierlich oder auch kontinuierlich in einem der von der Celluloseetherchemie her bekannten Aggregate durchgeführt werden ; wenn die Temperatur des Reaktionsgemisches so hoch gewählt wird, daß sie über der Siedetemperatur des Lösemittel/$H_2O$-Gemisches liegt, empfiehlt sich die Durchführung des erfindungsgemäßen Verfahrens in einer Druckapparatur ; auch bei Einsatz von unter Normalbedingungen (Normaldruck, Raumtemperatur) bereits gasförmigen Reaktionskomponenten wird üblicherweise in einer Druckapparatur gearbeitet (z. B. bei Einsatz von Ethylenoxid als Veretherungsmittel).

Die angegebene Zusammensetzung des Reaktionsgemisches gibt lediglich die Summe der Anteile der zur Reaktion erforderlichen Bestandteile zu Beginn der Veretherungsstufe an, dann liegt z. B. bei separater Alkalisierungsstufe bereits ein Teil der Cellulose und des Alkalimetallhydroxids als Alkalicellulose vor, und durch die Neutralisation von als Säure, als hydrolysierbarem Säurederivat oder als Hydrogensalz eingesetztem Veretherungsmittel entsteht zusätzliches Wasser. Wenn die Veretherungsmittel beispielsweise in der Form des Mono- oder Disalzes oder eines anderen alkalisch hydrolysierbaren Derivates eingesetzt werden, liegen ihre erforderlichen Einsatzmengen bei anderen Werten als die für die freie Säure einzusetzenden Gewichtsmengen ; d. h. die Begriffe « Halogenalkanphosphonat-Ionen » und « Halogenalkyl-alkylphosphinat-Ionen » wurden beispielsweise gewählt, um eine einheitliche Berechnungsgrundlage zu haben, und um den Zustand zu charakterisieren, in dem das Veretherungsmittel im alkalischen Medium zu Beginn der Reaktion hauptsächlich vorliegt.

Die angegebene Menge an « Hydroxid-Ionen » bezieht sich nur auf die zur Alkalisierung und Veretherung erforderliche Menge, die zur Bildung des Dianions des Veretherungsmittels noch erforderliche Menge an « Hydroxid-Ionen » muß noch dazugerechnet werden.

Die eingesetzte Cellulose ist entweder natürlicher Herkunft, beispielsweise Baumwoll-Linters oder Holz-Zellstoff, oder liegt in regenerierter Form wie als Cellulosehydrat vor ; die Teilchengröße der Cellulose sollte vor Beginn der Reaktion möglichst kleiner als etwa 2,5 mm, insbesondere kleiner als etwa 1 mm sein, wobei diese Teilchengröße beispielsweise durch Mahlung der längerfasrig angelieferten Cellulose zu « Pulvern » erreicht werden kann.

Die « Hydroxid-Ionen » werden bevorzugt als Alkalimetallhydroxid — üblicherweise NaOH, aber auch KOH oder LiOH — in fester Form oder in gelöster Form als wäßrige Alkalimetallhydroxid-Lösung eingesetzt, aber auch quartäre Ammoniumbasen können verwendet werden. Das erfindungsgemäße Verfahren kann mit Wasser als einziger Flüssigkeit im Reaktionsmedium durchgeführt werden oder auch insbesondere mit Zusatz eines inerten, bevorzugt mit Wasser mischbaren organischen Lösemittels, so daß eine mehr oder weniger feuchte Reaktionsmasse oder eine fließfähige Suspension entsteht. Als inerte, bevorzugt mit Wasser mischbare organische Lösemittel kommen insbesondere Isopropanol, Aceton, Dioxan, tert.-Butanol oder Gemische dieser Lösemittel in Betracht, wobei diese auch bereits mit Wasser vermischt sein können. Sofern das besonders bevorzugte Isopropanol als organisches Lösemittel eingesetzt wird, sollte das Gemisch an Lösemittel/$H_2O$ so eingestellt werden, daß der Wasseranteil 5 bis 50 Gew.-%, insbesondere 5 bis 30 Gew.-% beträgt. Die Wiedergewinnung und Wiederverwendung des besonders bevorzugt eingesetzten Isopropanols ist verhältnismäßig einfach, da oftmals die nach beendeter Veretherung auf mechanischem Wege (z. B. Filtration, Dekantieren oder Abschleudern) von den festen Anteilen abgetrennten flüssigen Bestandteile des Veretherungsgemisches aus salzhaltigen Isopropanol/$H_2O$-Gemischen bestehen, die eine einfache destillative Reinigung zur umweltfreundlichen Rückgewinnung des organischen Lösemittel-Anteils möglich machen.

Anstelle der bevorzugt zur Erzeugung des phosphorhaltigen Substituenten — d. h. zur Erzeugung der Halogenalkanphosphonat- oder Halogenalkyl-alkylphosphinat-Ionen — als Veretherungsmittel einzusetzenden Chloralkanphosphonsäuren, der Chloralkyl-alkylphosphinsäuren oder ihren Mono- bzw. Dinatriumsalzen können auch deren alkalisch hydrolysierbare Derivate (z. B. Säurechloride oder Ester), andere lösliche Salze wie Kalium- oder Ammoniumsalze, oder auch die entsprechenden Brom- oder Jod-Analogen anstelle der angegebenen Chlorverbindungen verwendet werden. Die bevorzugt eingesetzten Veretherungsmittel sind Chlormethyl-dimethylphosphanoxid, Chlormethyl-methylphosphinsäure, 3-Chlorpropyl-methylphosphinsäure, 3-Chlorpropanphosphonsäure, 3-Brompropanphosphonsäure oder ein entsprechendes Salz. In der angegebenen Reihenfolge steigt auch ihre Reaktionsfähigkeit gegenüber Alkalicellulose, Chlormethanphosphonsäure bzw. ihr Salz wäre etwa in der Mitte einzuordnen ; Chloressigsäure zeigt eine gegenüber all diesen Verbindungen wesentlich höhere Reaktivität.

Als Veretherungsmittel zur Erzeugung des oder der phosphorfreien Substituenten werden bevorzugt

Methylchlorid, Ethylchlorid, Ethylenoxid, Propylenoxid und/oder Monochloressigsäure oder ein entsprechendes Salz eingesetzt, aber auch Butylenoxid-1,2, Monochlorpropionsäure, Chlorethansulfonsäure, Vinylsulfonsäure, 1-N,N-Diethylamino-2-chlorethan oder 2,3-Epoxypropyl-trimethylammoniumchlorid können eingesetzt werden.

Die Reaktionsprodukte (mit Ausnahme der Abkömmlinge des Phosphanoxids) fallen, bezogen auf den phosphorhaltigen Substituenten in der Regel bei der Reaktion zunächst als dibasische Phosphonate oder monobasische Phosphinate an, die durch Zugabe von Säure in die monobasischen Phosphonate und/oder in die freien Säuren überführbar sind. Aus den monobasischen Salzformen bzw. den freien Säuren können durch Zugabe von Basen wie Metallhydroxid oder Ammoniumhydroxid wieder Salze erzeugt werden. Entsprechendes gilt natürlich auch für solche phosphorfreien Substituenten, die zunächst in der Salzform anfallen, wie beispielsweise den Carboxymethyl- oder den Sulfonoethylsubstituenten.

Bei der praktischen Durchführung des erfindungsgemäßen Verfahrens wird zweckmäßig zuerst die Cellulose im Gemisch aus gegebenenfalls organischem Lösemittel, Wasser und Alkalimetallhydroxid (oder quartäre Ammoniumbase) alkalisiert, wonach die Zugabe des Veretherungsmittels in einer oder mehreren Stufen (je nach Art des Veretherungsmittels) erfolgt. Es ist aber auch eine Alkalisierung ohne Anwesenheit von organischem Lösemittel möglich, wonach dessen Zugabe — sofern überhaupt erforderlich oder gewünscht — erst bei der oder den Veretherungsstufe(n) erfolgt, oder auch eine Zugabe der vollständigen Alkalimetallhydroxidmenge bei der oder den Veretherungsstufe(n), die dann gleichzeitig die Alkalisierungsstufe darstellt, d. h. ein separates Alkalisieren ist dann nicht erforderlich. Alle Stufen, gleichgültig ob als separate Alkalisierungs- oder Veretherungsstufe oder als Kombination beider Stufen durchgeführt, werden in der Regel unter guter Durchmischung gefahren. In der separaten Alkalisierungsstufe wird üblicherweise bei Raumtemperatur (etwa 15 bis 35 °C) gearbeitet, die Veretherung verläuft im allgemeinen bei 50 bis 100 °C, bei besonders reaktionsträgen Veretherungsmitteln auch bei einer Temperatur von bis zu 130 °C. Bei Durchführung der Alkalisierung und Veretherung in einer Stufe kann diese zunächst einige Zeit bei Raumtemperatur gefahren werden, bevor auf die endgültige, zur Veretherung erforderliche Temperatur erhöht wird. Wenn Isopropanol als organisches Lösemittel verwendet wird und das Verfahren ohne Einsatz von Druckaggregaten ablaufen soll, empfiehlt sich ein Arbeiten unterhalb der Siedetemperatur des 87 %igen azeotropen Gemisches an Isopropanol/$H_2O$ von 82 °C. Bei Einsatz von gasförmigem Veretherungsmittel (wie Ethylenoxid oder Methylchlorid) ist allerdings ein druckloses Arbeiten nicht zweckmäßig. Die erforderlichen Zeiten in der Veretherungsstufe liegen — je nach Reaktionstemperatur — im allgemeinen zwischen 30 min und 8 h. In einer Trennvorrichtung (z. B. einer Zentrifuge) wird das Rohprodukt, bevorzugt nach Zugabe von Säure bis zur Herstellung der monobasischen Salzform, zunächst vom Hauptteil der flüssigen Komponenten befreit und kann gegebenenfalls danach einer Extraktion zur Entfernung anhaftender Salze unterzogen werden ; danach wird es getrocknet und kann gegebenenfalls gemahlen, mit weiteren Komponenten vermischt oder auch granuliert werden ; diese Aufarbeitungs-, Reinigungs- und Nachbehandlungsmethoden sind die in der Celluloseetherchemie üblichen und benötigen deshalb keine ausführlichere Beschreibung.

Das erfindungsgemäße Verfahren kann aber auch so durchgeführt werden, daß entweder zuerst ein lediglich phosphorhaltige Substituenten aufweisender Celluloseether separat hergestellt wird, und dann anstelle von Cellulose in einer oder mehreren weiteren Veretherungsreaktion(en) zum Einsatz kommt, oder daß umgekehrt ein bereits vorgefertigter phosphorfreier Celluloseether, der noch veretherbare OH-Gruppen enthält, anstelle von Cellulose mit phosphorhaltigen Veretherungsmitteln umgesetzt wird. Derartige mehrstufige Verfahren zur Mischetherherstellung sind aber in der Regel einem « Eintopfverfahren » in ihrer Wirtschaftlichkeit unterlegen.

Die erfindungsgemäßen Celluloseether bzw. -mischether können auf den Gebieten der Technik eingesetzt werden, die auch von anderen gegebenenfalls anionaktiven Celluloseethern bzw. -mischethern her bekannt sind.

Am Beispiel der Herstellung von Phosphonalkylcellulosen sollen einige Aussagen über die Reaktivität der verschiedenen Veretherungsmittel gemacht werden. Die Einführung von Ethersubstituenten in die Cellulose geschieht technisch in großem Maßstab nach dem Prinzip der WILLIAMSON-Synthese durch Kondensationsreaktion von Halogenalkylverbindungen mit dem Polyalkohol Cellulose in alkalischem Medium unter Halogenwasserstoffabspaltung. Auf diese Weise sind durch Reaktion von Alkalicellulose mit z. B. Methylchlorid, Ethylchlorid oder einem Chloressigsäuresalz die Methyl-, Ethyl- oder Carboxymethylether als wertvolle Handelsprodukte zugänglich. Auch bei der Einführung von Phosphonomethylgruppen wird nach diesem Prinzip verfahren, wobei z. B. ein Chlormethanphosphonsäuresalz als Veretherungsmittel eingesetzt wird. Die Reaktivität des Halogens in diesem Reagens ist allerdings vergleichsweise geringer als in z. B. Methylchlorid oder Chloressigsäure aufgrund der elektronenanziehenden Wirkung der Phosphonsäuregruppen. In höheren Halogenalkanphosphonsäuren Hal —$(CH_2)_n$—$PO_3H_2$ (mit $n > 1$ und Hal = Cl oder Br) sollte theoretisch dieser Effekt geringer und damit die Reaktivität gegenüber der Halogenmethanphosphonsäure gesteigert sein. Es wird aber beobachtet, daß im Falle der 2-Halogenethanphosphonsäuren im alkalischen Medium wahrscheinlich bevorzugt eine intermolekulare Halogenwasserstoffabspaltung unter Bildung von Ethenphosphonsäure (bzw. deren salz) stattfindet. Obwohl die Doppelbindung aufgrund des elektronegativen Phosphonsäurerestes aktiviert und damit zur alkalikatalysierten Addition an die OH-Gruppen der Cellulose in analoger Weise

wie z. B. die Doppelbindungen in Acrylnitril oder Ethensulfonsäuresalz befähigt sein sollte, tritt diese Additionsreaktion nur in sehr geringem Maße auf, so daß sowohl mit 2-Halogenethan- wie mit Ethenphosphonsäuresalz praktisch keine 2-Phosphonoethylsubstitution beobachtet wird. Erst von einer $C_3$-Kette ab, d. h. beispielsweise mit 3-Chlor- bzw. 3-Brompropanphosphonsäure(salz) ist wieder erhöhte Reaktivität festzustellen. Bei größeren Kettenlängen wird das Eindringen des Reagens in die Struktur der gequollenen Alkalicellulose vermutlich bereits wieder gehindert, sodaß die Reaktionsfähigkeit bereits wieder erniedrigt wird.

Im Rahmen der vorliegenden Erfindung sollen auch solche Reaktionsprodukte mitumfaßt sein, die durch Vernetzung der Celluloseether zusätzlich weniger wasserlöslich gemacht werden, wobei solche vernetzten Celluloseether in der Praxis insbesondere als Ionenaustauscher oder als saugfähige hydrophilierende Zusätze zur Wasser- oder Wasserdampfaufnahme auf dem Hygienegebiet (z. B. in Windeln, Tampons oder anderen absorbierenden Gebilden) eingesetzt werden können. Eine weitere Lösung der eingangs gestellten Aufgabe ist deshalb auch ein Verfahren zur Herstellung eines zu mindestens 25 Gew.-%, insbesondere 40 Gew.-% wasserunlöslichen, vernetzten Celluloseethers oder -mischethers auf der Basis einer der oben genannten phosphorhaltigen Verbindungen, bei dem man vor, gleichzeitig mit oder nach der Veretherung der Cellulose mit einer mindestens bifunktionellen Verbindung, insbesondere im alkalischen Reaktionsmedium, vernetzt. Dazu sind u. a. die Vernetzungsmittel Formaldehyd, Epichlorhydrin, Dichloressigsäure, Diepoxide und Bisacrylamidoderivate geeignet, wobei die grundsätzliche Reaktionsführung bekannt ist ; es wird beispielsweise auf die bereits eingangs erwähnte DE-OS 26 00 930 (= US-PS 4 020 271) oder die DE-OS 23 57 079 (= US-PS 3 936 441) verwiesen.

In den folgenden Beispielen verhalten sich Gew.-Teile zu Vol.-Teilen wie g zu $cm^3$, die Prozentangaben sind auf das Gewicht bezogen. Die angegebenen Viskositätswerte wurden im Höppler-Kugelfallviskosimeter in 2 %iger wäßriger Lösung bei 20 °C bestimmt.

## Beispiel 1

Es werden 10 Gew.-Teile eines gemahlenen Fichtensulfitzellstoffs einer mittleren Teilchengröße von 0,5 mm mit der Suspension von 7,4 Gew.-Teilen Chlormethyl-dimethyl-phosphanoxid (= 1,0 mol pro mol Cellulose) in 19,5 Gew.-Teilen einer 46,5 %igen wäßrigen NaOH-Lösung (= 3,9 mol NaOH und 10,5 mol $H_2O$ pro mol Cellulose) in einem Feststoffmischaggregat während 30 min bei Raumtemperatur gründlich vermischt, und anschließend wird das Gemisch für eine Dauer von 2 h auf eine Temperatur von 110 °C erhitzt. Nach Abkühlung wird diese Masse in 70 %igem wäßrigem Methanol, das genügend Essigsäure zur Neutralisation von überschüssigem NaOH enthält, suspendiert und filtriert ; danach wird der feste Rückstand mehrere Male mit 70 %igem wäßrigem Methanol gewaschen und bei etwa 70 °C getrocknet. Die faserförmige 2-Methyl-2-oxo-2-phosphapropylcellulose weist einen Phosphorgehalt von 2,6 % (entsprechend einem $DS_p$ von 0,15) auf, sie quillt in Wasser leicht an und ist in 8 %iger wäßriger NaOH-Lösung klar löslich.

Werden für die Umsetzung anstelle der 19,5 Gew.-Teile einer 46,5 %igen wäßrigen NaOH-Lösung nur 14,0 Gew.-Teile einer 25 %igen wäßrigen NaOH-Lösung (1,5 mol NaOH pro mol Cellulose) unter sonst gleichen Bedingungen und Mengen eingesetzt, so enthält das Produkt weniger als 0,3 % Phosphor (entsprechend einem $DS_p$ von weniger als etwa 0,02) und ist auch in 8 %iger wäßriger NaOH-Lösung unlöslich.

## Beispiel 2

Es wird eine 2-Methyl-2-oxo-2-phosphapropylcellulose nach den Angaben des Beispiels 1 hergestellt. Das noch feuchte Produkt wird durch Spülen mit praktisch wasserfreiem Isopropanol weitgehend vom Methanol befreit und in 65 Gew.-Teilen eines 90 %igen wäßrigen Isopropanols suspendiert. Nach Zusatz von 7,5 Gew.-Teilen einer 50 %igen wäßrigen NaOH-Lösung (= 1,6 mol NaOH und 9,8 mol $H_2O$) wird während 30 min bei Raumtemperatur in einem Knetaggregat gemischt, wonach 8,8 Gew.-Teile Namonochloracetat (= 1,3 mol) zugesetzt werden. Dieses Reaktionsgemisch wird unter Durchmischung auf eine Temperatur von 75 °C erwärmt, und die Zweitveretherung wird bei dieser Temperatur während 1 h durchgeführt. Die erneute Neutralisation und die weitere Aufarbeitung erfolgen wie im Beispiel 1 für den reinen Ether. Der entstehende Mischether, die Natriumcarboxymethyl-(2-methyl-2-oxo-2-phosphapropyl)-cellulose mit einem $DS_p$ von 0,15 und einem $DS_{CM}$ von 0,74 ist klar wasserlöslich und hat eine Viskosität von 60 mPa · s.

## Beispiel 3

Es werden 10 Gew.-Teile eines gemahlenen Buchenzellstoffs einer mittleren Teilchengröße von 0,5 mm in 180 Gew.-Teilen eines praktisch wasserfreien Isopropanols suspendiert und nach Zugabe von 28,5 Gew.-Teilen einer 50 %igen wäßrigen NaOH-Lösung (= 4,1 mol NaOH und 16,2 mol $H_2O$) bei Raumtemperatur gerührt. Nach Zugabe von 15,2 Gew.-Teilen Chlormethyl-methylphosphinsäure (= 2,0 mol) wird das Gemisch auf eine Temperatur von 80 °C erhitzt und die Reaktion bei dieser Temperatur während 3 h durchgeführt. Nach Abkühlung, Neutralisation mit Essigsäure auf einen pH-Wert von etwa 8 bis 9,

Filtration, mehrmaligem Auswaschen mit 50 %igem wäßrigem Isopropanol und Trocknung wird eine fasrige Natrium-methylphosphino-methyl-cellulose eines Phosphorgehaltes von 2,2 % (entsprechend einem $DS_p$ von 0,13) erhalten, die in Wasser schwach quillt und in 8 %iger wäßriger NaOH-Lösung klar löslich ist.

Beispiel 4

Es wird nach den Angaben des Beispiels 3 verfahren, aber mit 18,5 Gew.-Teilen des Veretherungsmittels 3-Chlorpropyl-methylphosphinsäure (= 2,0 mol). Die entstehende Natrium-3-(methylphosphino)-propylcellulose hat einen Phosphorgehalt von 2,3 % ($DS_p$ von 0,13) und ist in Wasser zu etwa 60 % und in 8 %iger wäßriger NaOH-Lösung klar löslich.

Beispiel 5

Es werden 10 Gew.-Teile des Fichtensulfitzellstoffs in der Lösung von 2,3 Gew.-Teilen Chlormethyl-methylphosphinsäure (= 0,31 mol) in 61 Gew.-Teilen praktisch wasserfreien Isopropanols suspendiert und mit 15,7 Gew.-Teilen einer 20,4 %igen wäßrigen NaOH-Lösung (= 2,8 mol NaOH und 12,8 mol $H_2O$) während 40 min bei Raumtemperatur vermischt. Nach Zugabe von 11,6 Gew.-Teilen Ethylenoxid (= 5,0 mol) wird in einem druckdichten Knetaggregat während 1 h bei einer Temperatur von 30 °C, dann während 30 min bei 70 °C und abschließend noch 1 h bei 90 °C verethert. Nach Abkühlung, Neutralisation, Filtration, mehrmaligem Auswaschen mit 80 %igem wäßrigem Isopropanol und Trocknung wird eine Hydroxyethyl-(methylphosphino-methyl)cellulose in der Na-Salzform mit einem $MS_{HE}$ von 2,3 und einem $DS_p$ von 0,02 erhalten, die in Wasser klar löslich ist und deren Viskosität 6 200 mPa · s beträgt.

Beispiel 6

Es wird nach den Angaben des Beispiels 5 verfahren, aber mit 2,8 Gew.-Teilen 3-Chlorpropyl-methylphosphinsäure (= 0,31 mol) als einem der Veretherungsmittel. Die entstehende Hydroxyethyl-(3-methylphosphino-propyl)cellulose in der Na-Salzform hat einen $MS_{HE}$ von 2,3 und einen $DS_p$ von 0,09, ist klar wasserlöslich und weist eine Viskosität von 10 400 mPa · s auf.

Beispiel 7

Es werden 10 Gew.-Teile des Fichtenzellstoffs in einem Knetaggregat mit 39 Gew.-Teilen praktisch wasserfreiem Isopropanol und 18 Gew.-Teilen einer 42,6 %igen wäßrigen NaOH-Lösung (= 2,1 mol NaOH und 11,6 mol $H_2O$) während 40 min bei Rautemperatur vermischt. Danach wird die Lösung von 5,5 Gew.-Teilen 3-Chlorpropanphosphonsäure (= 0,6 mol) in 10 Gew.-Teilen des Isopropanols zugesetzt und die Veretherung während 5 h bei 60 °C durchgeführt. Die Neutralisation und Aufarbeitung erfolgt wie im Beispiel 3. Die entstehende Mononatrium-3-phosphonopropyl-cellulose besitzt einen $DS_p$ von 0,16, ist zu etwa 70 % in Wasser und praktisch rückstandsfrei in 8 %iger wäßriger NaOH-Lösung löslich.

Beispiel 8

Es wird nach den Angaben des Beispiels 7 verfahren, aber mit 7,1 Gew.-Teilen 3-Brompropanphosphonsäure (= 0,6 mol) als Veretherungsmittel. Das Produkt entspricht in seiner Struktur und den Eigenschaften dem im Beispiel 7 beschriebenen.

Beispiel 9

Es werden 10 Gew.-Teile einer handelsüblichen wasserlöslichen Hydroxyethylcellulose (hergestellt durch den Einsatz von etwa 1,0 mol NaOH und etwa 5 mol Ethylenoxid pro mol Cellulose in einem Isopropanol/$H_2O$-Gemisch) eines $MS_{HE}$ von 2,5 und einer Viskosität von 6 600 mPa · s in einem Knetaggregat in 29 Gew.-Teilen praktisch wasserfreiem Isopropanol suspendiert und mit 7,2 Gew.-Teilen einer 19,4 %igen wäßrigen NaOH-Lösung (= 0,57 mol NaOH und 9,2 mol $H_2O$) bei Raumtemperatur während 20 min gemischt. Nach Zusatz von 1,1 Gew.-Teilen 3-Chlorpropanphosphonsäure (= 0,19 mol) wird während 3 h bei einer Temperatur von 50 °C zweitverethert. Die Aufarbeitung erfolgt wie im Beispiel 5, wonach eine hydroxyethyl-3-phosphonopropylcellulose in der Na-Salzform mit einem $DS_p$ von 0,06 erhalten wird, die klar wasserlöslich ist und eine Viskosität von 2 500 mPa · s zeigt.

Beispiel 10

Es wird nach den Angaben des Beispiels 9 verfahren, aber mit 1,8 Gew.-Teilen 3-Brompropanphosphonsäure (= 0,24 mol) und einer solchen Menge an wäßriger NaOH-Lösung, daß 0,47 mol NaOH und 9,3 mol $H_2O$ zum Einsatz kommen. Das Produkt entspricht in seiner Struktur und seiner Löslichkeit dem in Beispiel 9 beschriebenen, weist aber mit einem $DS_p$ von 0,10 einen höheren Phosphorgehalt auf.

**Patentansprüche**

1. Mindestens einen phosphorhaltigen Substituenten aufweisende, zumindest zu 60 Gew.-% neutral wasserlösliche, bzw. im Fall nichtionischer Ether ohne phosphorfreien Zweitsubstituenten alkalilösliche, unvernetzte Celluloseether oder deren Mischether auf der Basis mindestens eines phosphorfreien Substituenten aus der Gruppe Alkyl, Hydroxyalkyl, Carboxyalkyl, Sulfonoalkyl, Aminoalkyl und Dialkylaminoalkyl, die als den oder die phosphorhaltigen Substituenten durch die allgemeine Formel

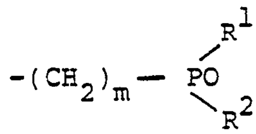

beschriebene Gruppen tragen, in der

$R^1$ und $R^2$ = OX, oder $R^1$ = OX und $R^2$ = OY, oder $R^1$ = OX und $R^2 = (CH_2)_n—CH_3$, oder $R^1$ und $R^2 = (CH_2)_n—CH_3$, oder $R^1 = (CH_2)_n—CH_3$ und $R^2 = (CH_2)_p—CH_3$ sind, wobei

X, Y ein Wasserstoffatom oder ein einwertiges Kation,

m eine ganze Zahl von 1 bis 4, und

n, p gleich oder verschieden sind und 0 oder 1

bedeuten, ausgenommen solche Gruppen, in denen m = 1 oder 2 und $R^1$ und $R^2$ = OX oder $R^1$ = OX und $R^2$ = OY sind.

2. Verbindungen nach Anspruch 1, dadurch gekennzeichnet, daß in der allgemeinen Formel X und/oder Y = Wasserstoff, $Na^+$ oder $NH_4^+$, m = 1 oder 3, und n oder n und p = 0 sind.

3. Verbindungen nach Anspruch 1 oder 2, dadurch gekennzeichnet, daß sie als phosphorfreie Substituenten im Mischether einen Methyl-, Ethyl-, Hydroxyethyl-, Hydroxypropyl- und/oder Carboxymethyl-Substituenten tragen.

4. Verbindungen nach Anspruch 1 oder 2, dadurch gekennzeichnet, daß der Substitutionsgrad ($DS_p$) bezogen auf den oder die phosphorhaltigen Substituenten im Celluloseether bei 0,05 bis 0,8 liegt.

5. Verbindungen nach einem der Ansprüche 1 bis 3, dadurch gekennzeichnet, daß der Substitutionsgrad ($DS_p$) bezogen auf den oder die phosphorhaltigen Substituenten im Cellulosemischether bei 0,02 bis 0,3 liegt.

6. Verbindungen nach einem der Ansprüche 1 bis 3 oder 5, dadurch gekennzeichnet, daß der Cellulosemischether als phosphorfreien Substituenten einen Hydroxyethyl-Substituenten mit einem $MS_{HE}$ von 1,3 bis 3,0 und/oder einen Carboxymethyl-Substituenten mit einem $DS_{CM}$ von 0,3 bis 1,5 aufweist.

**Claims**

1. Non-crosslinked cellulose ethers or cellulose mixed ethers, which carry at least one phosphorus-containing substituent and are neutrally soluble in water to at least 60 % by weight or, in the case of nonionic ethers without a phosphorus-free second substituent, are soluble in alkaline media, and which are based on at least one phosphorus-free substituent chosen from the group including alkyl, hydroxyalkyl, carboxyalkyl, sulfonoalkyl, aminoalkyl and diaminoalkyl and carry, as the phosphorus-containing substituent(s), groups responding to the general formula

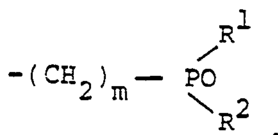

in which

$R^1$ and $R^2$ denote OX ; or $R^1$ denotes OX and $R^2$ denotes OY ; or $R^1$ denotes OX and $R^2$ denotes $(CH_2)_n—CH_3$ ; or $R^1$ and $R^2$ denote $(CH_2)_n—CH_3$ ; or $R^1$ denotes $(CH_2)_nCH_3$ and $R^2$ denotes $(CH_2)_p—CH_3$ ; with

X and Y denoting a hydrogen atom or a monovalent cation ;

m denoting an integer from 1 to 4 ; and

n and p are identical or different and denote 0 or 1 ;

with the exception of those groups where m denotes 1 or 2 and $R^1$ and $R^2$ denote OX or $R^1$ denotes OX or $R^2$ denotes OY.

2. Compounds as claimed in claim 1, wherein in the general formula X and/or Y denote(s) hydrogen, $Na^+$ or $NH_4^+$ ; m denotes 1 or 3 ; and n or n and p denote(s) 0.

3. Compounds as claimed in claim 1 or 2, wherein the phosphorus-free substituents of the mixed

ethers comprise methyl, ethyl, hydroxyethyl, hydroxypropyl and/or carboxymethyl.

4. Compounds as claimed in claim 1 or 2, wherein the degree of substitution ($DS_p$) ranges from 0.05 to 0.8, relative to the phosphorus-containing substituent(s) of the cellulose ether.

5. Compounds as claimed in any of claims 1 to 3, where in the degree of substitution ($DS_p$) ranges from 0.02 to 0.3, relative to the phosphorus-containing substituent(s) of the cellulose mixed ether.

6. Compounds as claimed in any of claims 1 to 3 or 5, wherein the cellulose mixed ether carries, as the phosphorus-free substituent, a hydroxyethyl substituent having a $MS_{HE}$ of 1.3 to 3.0 and/or a carboxymethyl substituent having a $DS_{CM}$ of 0.3 to 1.5.

**Revendications**

1. Ethers ou éthers mixtes de cellulose non réticulés, comportant au moins un substituant phosphoré, solubles au moins à 60 % en poids dans l'eau à neutralité, ou dans le cas d'éthers non ioniques, exempts de seconds substituants non phosphorés, dans des alcalis, éthers à base d'au moins un substituant non phosphoré choisi parmi des groupes alkyle, hydroxyalkyle, carboxyalkyle, sulfonoalkyle, aminoalkyle et dialkylaminoalkyle, qui comportent en tant que le ou les substituants phosphorés des groupes correspondant à la formule générale

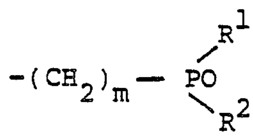

dans laquelle

$R^1$ et $R^2 = OX$, ou $R^1 = OX$ et $R^2 = OY$, ou $R^1 = OX$ et $R^2 = (CH_2)_n—CH_3$, ou $R^1$ et $R^2 = (CH_2)_n—CH_3$, ou $R^1 = (CH_2)_n—CH_3$ et $R^2 = (CH_2)_p—CH_3$,

X, Y représentant un atome d'hydrogène ou un cation monovalent,

m représentant un nombre entier valant de 1 à 4, et

n, p étant identiques ou différents et représentant 0 ou 1,

à l'exclusion des groupes dans lesquels m = 1 ou 2 et $R^1$ et $R^2 = OX$ ou $R^1 = OX$ et $R^2 = OY$.

2. Composés selon la revendication 1, caractérisés en ce que, dans la formule générale, X et/ou Y représente(nt) un atome d'hydrogène, $Na^+$ ou $NH_4^+$, m = 1 ou 3, et n ou n et p = 0.

3. Composés selon la revendication 1 ou 2, caractérisés en ce qu'ils comportent en tant que substituant non phosphoré dans l'éther mixte, un substituant méthyle, éthyle, hydroxyéthyle, hydroxypropyle et/ou carboxyméthyle.

4. Composés selon la revendication 1 ou 2, caractérisés en ce que le degré de substitution ($DS_p$) concernant le ou les substituants phosphorés dans l'éther de cellulose va de 0,05 à 0,8.

5. Composés selon l'une des revendications 1 à 3, caractérisés en ce que le degré de substitution ($DS_p$) concernant le ou les substituants phosphorés dans l'éther mixte de cellulose va de 0,02 à 0,3.

6. Composés selon l'une des revendications 1 à 3 ou 5, caractérisés en ce que l'éther mixte de cellulose comporte en tant que substituants non phosphorés un substituant hydroxyéthyle ayant un $MS_{HE}$ allant de 1,3 à 3,0 et/ou un substituant carboxyméthyle ayant un $DS_{CM}$ allant de 0,3 à 1,5.